(19) Europäisches Patentamt
European Patent Office
Office européen des brevets

(11) Publication number: **0 519 484 A2**

(12) **EUROPEAN PATENT APPLICATION**

(21) Application number: **92110339.6**

(51) Int. Cl.[5]: **C04B 35/26**, C04B 35/64

(22) Date of filing: **19.06.92**

(30) Priority: **18.06.91 JP 145729/91**

(43) Date of publication of application:
**23.12.92 Bulletin 92/52**

(84) Designated Contracting States:
**DE NL**

(71) Applicant: **NIPPON STEEL CORPORATION**
**6-3 Otemachi 2-chome Chiyoda-ku**
**Tokyo 100(JP)**

(72) Inventor: **Fumiaki, Takahashi, c/o Nippon Steel Corporation**
**Advanced Materials & Tech. Res. Lab., 1618, Ida**
**Nakahara-ku, Kawasaki-shi, Kanagawa(JP)**
Inventor: **Wataru, Ohashi, c/o Nippon Steel Corporation**
**Advanced Materials & Tech. Res. Lab., 1618, Ida**
**Nakahara-ku, Kawasaki-shi, Kanagawa(JP)**
Inventor: **Kohji, Watanabe, c/o Nippon Steel Corporation**
**Advanced Materials & Tech. Res. Lab., 1618, Ida**
**Nakahara-ku, Kawasaki-shi, Kanagawa(JP)**

(74) Representative: **Vossius & Partner**
**Siebertstrasse 4 P.O. Box 86 07 67**
**W-8000 München 86(DE)**

(54) **Low power-loss oxide magnetic material and process for producing same.**

(57) An oxide magnetic material containing excess oxygen in an amount of $\gamma$ specified by the following molecular formula

$$Zn^{2+}_{a}\ Mn^{3+}_{b}\ Mn^{2+}_{c}\ Fe^{2+}_{d}\ Fe^{3+}_{e}\ Vc_{f}\ O^{2-}_{4+\gamma}$$

wherein a + b + c + d + e + f = 3 + ¾$\gamma$ , $\gamma$ = 3 × $10^{-3}$ to 10 × $10^{-3}$ and $Vc_f$ is vacancy can be provided by placing a material comprising 50 to 56% by mole of $Fe_2O_3$, 25 to 40% by mole of MnO and 5 to 20% by mole of ZnO, the molar amounts of $Fe_2O_3$, MnO and ZnO being those obtained by converting the total amount of Fe, the total amount of Mn and the total amount of Zn into the respective molar amounts of $Fe_2O_3$, MnO and ZnO, and optionally 2% by mole of at least one member selected from the group consisting of oxides of Ti, Li, Mg, Co, Ge, Sn, Si, Ca, V and Al, in a furnace and conducting a treatment wherein the temperature is held at the maximum sintering temperature during sintering and a treatment wherein the temperature is lowered from the holding temperature to at least 1100°C while varying the partial pressure of oxygen, $Po_2$, according to the following equation (1) depending upon the temperature:

$$\log Po_2 = A\,(1/T) + \alpha \qquad (1)$$

wherein T represents an absolute temperature, A is a value in the range of from -15500 to -13600 and $\alpha$ is a value in the range of from 6 to 10, and further lowering the temperature to room temperature.

EP 0 519 484 A2

The present invention relates to a low-power loss Mn-Zn ferrite suitable as a material for a core of a transformer used in a switching converter, a power supply of a display monitor, etc., and a process for producing same.

Since Mn-Zn ferrite is a non-stoichiometric at its composition, even though the starting composition is identical, products have different properties when production conditions, for example, the partial pressure of oxygen, during sintering are varied.

Specifying the amount of $Fe^{2+}$, which has a great influence on the properties of Mn-Zn ferrite, is considered useful for solving this problem, but since a balance between the amount of $Fe^{2+}$ and the amount of ions other than $Fe^{2+}$ is important to the properties of the ferrite, materials fitting this concept do not always satisfy the property requirements.

Japanese Unexamined Patent Publication (Kokai) No. 47-5774 discloses a process for producing a Mn-Zn ferrite wherein, after a Mn-Zn ferrite is formed into a desired shape, the sintering and cooling are conducted under conditions satisfying a requirement for the relationship between the partial pressure of oxygen, $Po_2$, and the temperature, T, represented by the following equation.

$$\log_{10} Po_2 = -C_1/T + C_2$$

Japanese Unexamined Patent Publication (Kokai) No. 61-108109 discloses a process for producing a Mn-Zn ferrite wherein a manganese-zinc ferrite core containing titanium and cobalt and a preliminarily sintered mixture is sintered and cooled under a partial pressure of oxygen determined by the equation $\log Po_2 = -C_1/T + C_2$. In the above-described prior art methods, however, neither the influence of a variation in the charge balance within the ferrite derived from the presence of additives nor a measure to be taken for preventing this influence, is disclosed, and thus these prior art techniques are considered unsatisfactory for reducing the power loss of the Mn-Zn ferrites produced.

Accordingly, an object of the present invention is to provide a process for producing a Mn-Zn ferrite having significantly improved power loss properties compared to those of the prior art.

Ions, as main components such as $Fe^{2+}$, $Fe^{3+}$, $Mn^{2+}$, $Mn^{3+}$, $Zn^{2+}$, $O^{2-}$ and ions of elements added in a minor amount, are present in a Mn-Zn ferrite, and the proportions in which these ions exist are such that the charge balance is obtained according to the valence numbers of respective elements. Individual ions differ from each other in their influence on magnetic properties. For example, the presence of $Fe^{2+}$ increases the electric conductivity, which is disadvantageous from the viewpoint of suppressing the eddy current loss.

To suppress the hysteresis loss of the Mn-Zn ferrite, it is indispensable to reduce the absolute values of the magnetic anisotropy constant and the magnetostriction constant. It is known that $Fe^{2+}$ and $Mn^{3+}$ have a larger influence on the anisotropy constant and magnetostriction constant as fundamental property values of the Mn-Zn ferrite than the other elements contained in the ferrite, and $Fe^{2+}$ is one of the ions that makes a positive contribution to the magnetic anisotropy constant, $K_1$.

Therefore, when these ions are allowed to exist in respective suitable amounts in the ferrite, it becomes possible to reduce the magnetic anisotropy constant to reduce the hysteresis loss.

Thus, the optimization of the balance of ions, to thereby lower both the eddy current loss and the hysteresis loss, is important to the suppression of the power loss of the Mn-Zn ferrite.

The specifying of the amount of $Fe^{2+}$ has been proposed for attaining this purpose, but this proposal, is not realistic from the viewpoint of producing a ferrite.

Specifically, the amount of $Fe^{2+}$ cannot be specified by this parameter alone, as it is determined by the charge balance of all the ions present in the ferrite. Therefore, it has been found that the amount of $Fe^{2+}$ should be determined such that the charge balance is also established between the amount of $Fe^{2+}$ and the excess oxygen, $\gamma$. That is, it has been confirmed that the parameter capable of directly controlling the charge balance of ions present in the ferrite is excess oxygen, $\gamma$. The excess oxygen is determined by the composition of ferrite and the partial pressure of oxygen in the sintering atmosphere.

It is also possible to learn of the amount of excess oxygen through a determination of the amounts of respective ions present in the sintered Mn-Zn ferrite.

An optimal partial pressure of oxygen during sintering renders the charge balance of ions in the ferrite optimal.

The present inventors found that optimal magnetic properties can be obtained when the ferrite is composed mainly of 50 to 56% by mole of $Fe_2O_3$, 25 to 40% by mole of MnO and 5 to 20% by mole of ZnO (the molar amounts are those obtained by converting the total amount of Fe, the total amount of Mn and the total amount of Zn into the respective amounts of $Fe_2O_3$, MnO and ZnO; the same shall apply hereinafter) and the ion balance of the ferrite is such that the content of excess oxygen is specified by the following molecular formula

$$Zn^{2+}_{a}\ Mn^{3+}_{b}\ Mn^{2+}_{c}\ Fe^{2+}_{d}\ Fe^{3+}_{e}\ Vc_{f}\ O^{2-}_{4+\gamma}$$

wherein a + b + c + d + e + f = 3 + ¾$\gamma$, $\gamma$ = 3 × $10^{-3}$ to 10 x $10^{-3}$ and $Vc_f$ is vacancy. The reason why the molar amounts (% by mole) of ingredients are limited to the above-described respective ranges is that, when the amounts of the ingredients deviate from the above-described respective ranges, the temperature dependance of powder loss and magnetic flux density become values unsuitable for application of the magnetic material.

The valence number of a cation in a Mn-Zn ferrite is decided by a charge balance. On the other hand, a size of a site in a lattice of the ferrite to which the cation is inserted is decided according to a constant proportion of an amount of oxygen. Therefore, if all valence numbers of the cation are reduced under the charge balance, and when the valence number of the respective cations, e.g. $Fe^{2+}$, $Fe^{3+}$ or $Mn^{2+}$, etc., cannot be further reduced, the cation itself must be deleted from the lattice of the ferrite, whereby a vacancy (hole) is formed. Vc is the cation vacancy which is decided by the conditions of the charge balance and the size of the site of the cation.

Besides the above-described ingredients, at least one member selected from the group consisting of oxides of Ti, Li, Mg, Co, Ge, Sn, Si, Ca, V and Al may be added; in this case they may be each added in an amount of 2% by mole (this amount does not contain zero). These additives in the above-described respective ranges makes a solid solution with ferrite and improve electrical and magnetic properties of the ferrite.

Oxides such as $SiO_2$, CaO and $V_2O_5$ can enhance the grain boundary resistance when present in the grain boundary, and therefore, $SiO_2$, CaO and $V_2O_5$ can be added in an amount of from 50 to 300 ppm by weight, an amount of from 100 to 1000 ppm by weight, and an amount of from 50 to 1000 ppm by weight, respectively.

Also, $TiO_2$ can obtain a good result in an amount of from 1000 to 5000ppm by weight, in which $SiO_2$, CaO and $V_2O_5$ exist.

The addition of the above-described oxides improves the magnetic properties of the Mn-Zn ferrite and realizes a low-power loss.

When the sintering condition is identical, the incorporation of the above-described additives in the Mn-Zn ferrite leads to a variation in the charge balance of ions in the ferrite, and this causes the proportions of presence of ions such as $Fe^{2+}$, $Fe^{3+}$ and $Mn^{3+}$ to be varied, so that magnetic properties may become inferior to those in the Mn-Zn ferrite, wherein a composition exclusive of these additives is identical.

This problem can be solved, and good results can be obtained, by limiting the amount of excess oxygen, $\gamma$ to 3 × $10^{-3}$ to 10 × $10^{-3}$ exclusive of the amount of oxygen in the additives.

A process for producing a magnetic material capable of providing the above-described amount of excess oxygen, $\gamma$, will now be described.

In the production of an oxide magnetic material, starting compounds are usually calcined, pulverized, granulated, formed into a predetermined shape, and sintered in an atmosphere inwhich a partial pressure of oxygen is controlled. In the present invention, the partial pressure of oxygen, $Po_2$, of the atmosphere during sintering is varied with a change in the temperature, T, for obtaining the above-described $\gamma$ value.

Specifically, the partial pressure of oxygen, $Po_2$, is varied according to the following formula (1)

$$\log Po_2 = A\,(1/T) + \alpha \qquad (1)$$

wherein T represents an absolute temperature, A is a value of from -15500 to -13600 and $\alpha$ represents a constant calculated from the composition of the ferrite and an intended $\gamma$ value and is a value of from 6 to 10 in the present invention.

The partial pressure of oxygen in the furnace at the time of the maximum sintering temperature is determined by the composition of the sample to be sintered, the intended amount of excess oxygen, $\gamma$, and the maximum sintering temperature. The $\alpha$ value of the equation (1) which provides the partial pressure of oxygen at the time of lowering the temperature from the maximum sintering temperature is determined by substituting the partial pressure of oxygen and temperature at the time of the maximum sintering temperature respectively for $Po_2$ and T of the equation (1).

In the present invention, the control of the partial pressure of oxygen is conducted while holding the sintering temperature at the maximum temperature, for example, 1250°C, and in the step of cooling the material to at least 1100°C after sintering. The control of the partial pressure of oxygen is indispensable when the temperature during the lowering of the temperature is 1100°C or above. When the sintering temperature falls below 1100°C, the material can be cooled without a control of the partial pressure of

oxygen determined by the equation (1) to room temperature, but if necessary, may be cooled from a suitable temperature to room temperature with the $Po_2$, i.e., the partial pressure of less than 1000 ppm, kept constant.

As described above, the present inventors have noticed that the $\gamma$ value is one of measures of ion balance and have found that good magnetic properties of ferrite can be obtained in proportions of existence of ions with the $\gamma$ value being $3 \times 10^{-3}$ to $10 \times 10^{-3}$. Further, the present invention provides a partial pressure of oxygen in a sintering atmosphere suitable for attaining this purpose.

The invention will be described in detail in connection with the drawings in which Fig. 1 is a graph showing the relationship between the power loss property and the amount of excess oxygen, $\gamma$; and

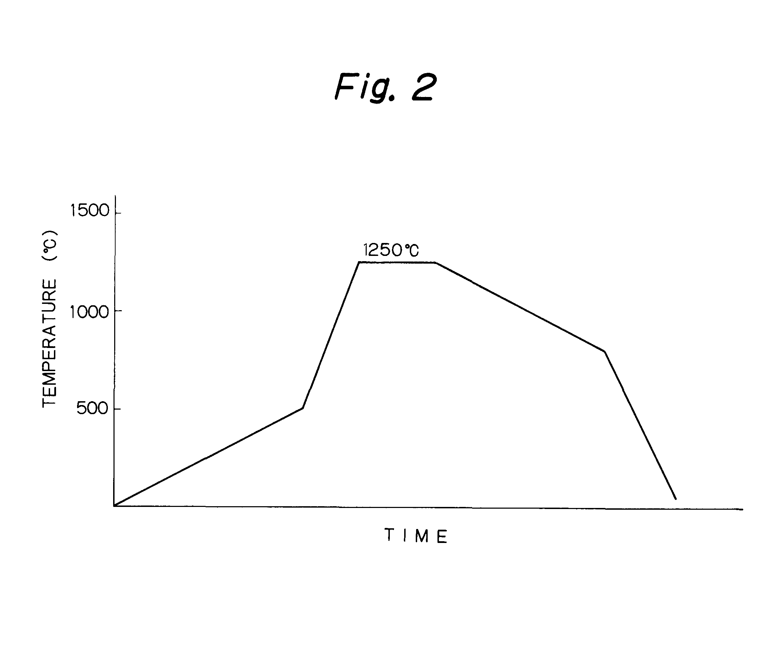

Fig. 2 is a graph showing the heat pattern of the sintering treatment according to the present invention.

The present inventors have produced a magnetic material by the following process through the use of samples specified in Table 1 and determined the relationship between the amount of excess oxygen and the power loss.

At the outset, individual components were weighed to give compositions specified in Table 1 and having a weight of 500 g in total of the individual components, and the compositions were mixed and pulverized together with 500 g of water by a ball mill for 10 hr. The slurries were dried, and the resultant powders were calcined at 950 °C for 2 hr and again pulverized together with 500 g of water by a ball mill for 5 hr.

The slurries were dried, and 1% by weight of polyvinyl alcohol was added to the resultant powders. The mixtures were granulated and formed into a toroidal core.

The samples thus prepared were heated under an oxygen partial pressure of 0.21 atm until the temperature was raised to 900 °C, and these samples were then further heated from 900 °C to the maximum sintering temperature, i.e., 1250 °C, and were maintained at this maximum sintering temperature for 4 hr, under a partial pressure of oxygen at the maximum sintering temperature determined by the equation (1) and were lowered from the maximum sintering temperature to 900 °C under partial pressures of oxygen determined by the equation (1). The heat pattern is shown in Fig. 2. A latitude in the $\alpha$ value of the equation (1) was allowed as shown in Table 2 so that the amount of excess oxygen, $\gamma$, became various values in the range of from $0.5 \times 10^{-3}$ to $14 \times 10^{-3}$.

The control of the partial pressure of oxygen was conducted through the regulation of the mixing ratio of nitrogen to air or oxygen.

Samples sintered under various partial pressures of oxygen were subjected to measurement of the minimum power loss under conditions of a frequency of 100 kHz and a maximum magnetic flux density of 200 mT, and the results are shown in Fig. 1. As apparent from Fig. 1, a good power loss property was obtained when the $\gamma$ value was in the range of from $3.0 \times 10^{-3}$ to $8 \times 10^{-3}$. Although the power loss when the $\gamma$ value is in the range of from $8 \times 10^{-3}$ to $10 \times 10^{-3}$ i.e., the $\gamma$ value of the present invention is from $3.0 \times 10^{-3}$ to $10 \times 10^{-3}$, is inferior to that when the $\gamma$ value is zero, the other magnetic properties in the above range of the $\gamma$ value are improved to give better results as a magnetic material, and therefore, in the present invention, the amount of excess oxygen, $\gamma$, was limited to $3.0 \times 10^{-3}$ to $10 \times 10^{-3}$. It is understood that, in the case of a sample wherein an auxiliary component capable of dissolving in grains has been added, a Mn-Zn ferrite having a good loss property can be obtained when the sintering is conducted in an atmosphere having a partial pressure of oxygen capable of providing a $\gamma$ value subjected to correction with respect to a change in the charge balance derived from the dissolution of the auxiliary component atom.

When the $\alpha$ value is in the above-described range, that is, in the range of from 6 to 10, some values of the amount of excess oxygen, $\gamma$, are outside the acceptable range ($3.0 \times 10^{-3}$ to $10 \times 10^{-3}$). The reason for this is that the $\alpha$ value is not determined by the amount of excess oxygen, $\gamma$, alone but varies depending upon the composition as well.

Specifically, when the compositions of ingredients of the present invention other than those specified in Table 1 is taken into consideration, the $\alpha$ value which allows the $\gamma$ value to fall within the acceptable range in all the compositions is in the range of from 6 to 10. For example, in the samples listed in Table 1, in the case of No. A, an $\alpha$ value in the range of from 7.413 to 8.267 provides an $\gamma$ value in the acceptance range, and in the case of No. C, an $\alpha$ value in the range of from 8.100 to 8.601 provides an $\gamma$ value in the acceptable range. That is, the $\alpha$ value greatly varies within the above-described range depending upon the composition.

According to the present invention, a Mn-Zn ferrite having a low power loss can be prepared through the optimization of the amount of oxygen of a ferrite based on the ratio of main components and the concentration of additives.

Table 1

| No. | $Fe_2O_3$ | MnO | ZnO | CaO | $SiO_2$ | $TiO_2$ | $SnO_2$ | $Al_2O_3$ |
|---|---|---|---|---|---|---|---|---|
| A | 52.5 | 37.5 | 10.0 | 650 | 350 | 0 | 0 | 0 |
| B | 52.5 | 35.4 | 12.1 | 700 | 300 | 0 | 0 | 0 |
| C | 53 | 32.8 | 13.9 | 640 | 260 | 3100 | 0 | 0 |
| D | 53.6 | 30.9 | 15.3 | 830 | 370 | 0 | 1700 | 0 |
| E | 52.5 | 35.6 | 11.7 | 800 | 200 | 0 | 0 | 2000 |
| Note) Unit of amount for $Fe_2O_3$, MnO and ZnO is % by mole. Unit of amount for CaO, $SiO_2$, $TiO_2$, $SnO_2$ and $Al_2O_3$ is ppm (by weight). | | | | | | | | |

Table 2

| No. | $\alpha$ |
|---|---|
| A | 6.221 - 8.551 |
| B | 6.276 - 8.588 |
| C | 7.812 - 8.802 |
| D | 7.414 - 8.694 |
| E | 6.257 - 8.566 |

The present invention will now be described in more detail with reference to the following examples, that by no means limit the scope of the present invention.

Example:

Ingredients were weighed to give samples A to E respectively having compositions at the time of molding of a core specified in Table 1. These samples were each mixed for 10 hr in a ball mill. The mixtures were dried and then calcined at 950°C for 2 hr. the calcination products were pulverized for 5 hr by a ball mill.

A polyvinyl alcohol solution was added as a binder to the powdery raw materials thus prepared, and they were granulated and molded under a pressure of 2 ton/$cm^2$ into a toroidal ring core having an outer diameter of 30 mm, an inner diameter of 17.5 mm and a height of 6.5 mm.

These samples were sintered in a controlled partial pressure of oxygen atmosphere in a furnace under conditions of a maximum sintering temperature of 1250°C and a holding time of 4 hr. Thereafter, the amount of excess oxygen, $\gamma$, of the sintering atmosphere down to a temperature of 900°C was set to a value specified in Table 3. The $\alpha$ value of the equation (1) was determined as shown in Table 3 from the composition and the amount of excess oxygen, $\gamma$, so that this $\gamma$ value can be obtained. the partial pressure of excess oxygen, $Po_2$, of the atmosphere in the furnace was controlled based on the equation (1) according to the temperature, which was lowered from 1250 to 900°C.

When the temperature of the atmosphere reached 900°C, the samples were cooled to room temperature with the partial pressure of oxygen being kept at a value determined according to the temperature of 900°C.

The resultant samples were subjected to measurement of a power loss under conditions of a frequency of 100 kHz and a maximum magnetic flux density of 200 mT. The results are given in Table 3.

Table 3

| $\gamma \times 10^{-3}$ | A |  | B |  | C |  | D |  | E |  |
|---|---|---|---|---|---|---|---|---|---|---|
|  | α | Power Loss (kw/m$^3$) | α | Power Loss (kw/m$^3$) | α | Power Loss (kw/m$^3$) | α | Power Loss (kw/m$^3$) | α | Power Loss (kw/m$^3$) |
| 0.5 | 6.221 | 510 | 6.276 | 480 | 7.812 | 410 | 7.438 | 470 | 6.257 | 480 |
| 2 | 7.138 | 480 | 7.195 | 430 | 7.997 | 360 | 7.718 | 450 | 7.174 | 450 |
| 3 | 7.413 | 480 | 7.469 | 410 | 8.100 | 340 | 7.860 | 440 | 7.449 | 450 |
| 5 | 7.766 | 460 | 7.823 | 400 | 8.274 | 340 | 8.084 | 430 | 7.802 | 450 |
| 8.5 | 8.146 | 530 | 8.205 | 450 | 8.514 | 400 | 8.371 | 450 | 8.184 | 520 |
| 10 | 8.267 | 580 | 8.326 | 500 | 8.601 | 460 | 8.470 | 530 | 8.305 | 560 |
| 12 | 8.406 | 680 | 8.466 | 580 | 8.706 | 570 | 8.588 | 660 | 8.445 | 650 |
| 14 | 8.527 | 800 | 8.588 | 650 . | 8.802 | 670 | 8.694 | - | 8.566 | 760 |

## Claims

1. An oxide magnetic material comprising a Mn-Zn ferrite consisting essentially of 50 to 56% by mole of $Fe_2O_3$, 25 to 40% by mole of MnO and 5 to 20% by mole of ZnO, the molar amounts of $Fe_2O_3$, MnO and ZnO being those obtained by converting the total amount of Fe, the total amount of Mn and the

total amount of Zn into the respective molar amounts of $Fe_2O_3$, MnO and ZnO, said ferrite containing excess oxygen in an amount of $\gamma$ specified by the following molecular formula

$$Zn_a^{2+}\ Mn_b^{3+}\ Mn_c^{2+}\ Fe_d^{2+}\ Fe_e^{3+}\ Vc_f\ O^{2-}_{4+\gamma}$$

wherein $a + b + c + d + e + f = 3 + \frac{3}{4}\gamma$, $\gamma = 3 \times 10^{-3}$ to $10 \times 10^{-3}$ and $Vc_f$ is vacancy.

**2.** The oxide magnetic material according to claim 1, which further comprises as an additive at least one member selected from the group consisting of oxides of Ti, Li, Mg, Co, Ge, Sn, and Al each in an amount of 2% by mole (this amount does not contain zero) and has an excess oxygen content, $\gamma$, contained in the range of from $3 \times 10^{-3}$ to $10 \times 10^{-3}$ specified by the molecular formula of claim 1, this formula is considered, except for the additive.

**3.** The oxide magnetic material according to claim 1, which further comprises as an additive 50 to 300 ppm by weight of $SiO_2$, 100 to 1000 ppm by weight of CaO, 50 to 1000 ppm by weight of $V_2O_5$ and/or 1000 to 5000 ppm by weight of $TiO_2$ and has an excess oxygen content, $\gamma$, contained in the range of from $3 \times 10^{-3}$ to $10 \times 10^{-3}$ specified by the molecular formula of claim 1, this formula is considered, except for the additive.

**4.** The oxide magnetic material according to claim 1, which further comprises as an additive at least one member selected from the group consisting of oxides of Ti, Li, Mg, Co, Ge, Sn and Al each in an amount of 2% by mole (this amount does not contain zero) and as an additive 50 to 300 ppm by weight of $SiO_2$ and 100 to 1000 ppm by weight of CaO and has an excess oxygen content, $\gamma$, contained in the range of from $3 \times 10^{-3}$ to $10 \times 10^{-3}$ specified by the molecular formula of claim 1, this formula is considered, except for the additive.

**5.** A process for producing a low-power loss oxide magnetic material comprising a Mn-Zn ferrite, comprising the steps of:

placing a material comprising 50 to 56% by mole of $Fe_2O_3$, 25 to 40% by mole of MnO and 5 to 20% by mole of ZnO, the molar amounts of $Fe_2O_3$, MnO and ZnO being those obtained by converting the total amount of Fe, the total amount of Mn and the total amount of Zn into the respective molar amounts of $Fe_2O_3$, MnO and ZnO in a furnace; and

conducting a treatment wherein the temperature is held at the maximum sintering temperature during sintering and a treatment wherein the temperature is lowered from the holding temperature to at least 1100°C while varying the partial pressure of oxygen, $Po_2$, according to the equation (1) depending upon the temperature:

$$\log Po_2 = A\,(1/T) + \alpha \qquad (1)$$

wherein T represents an absolute temperature, A is a value in the range of from -15500 to -13600 and $\alpha$ is a value in the range of from 6 to 10.

**6.** The process according to claim 5, wherein at least one member selected from the group consisting of oxides of Ti, Li, Mg, Co, Ge, Sn and Al each in an amount of 2% by mole (this amount does not contain zero) is added to the raw material.

**7.** The process according to claim 5, wherein said raw material further comprises as additives for constituting auxiliary ingredients 50 to 300 ppm by weight of $SiO_2$, 100 to 1000 ppm by weight of CaO, 50 to 1000 ppm by weight of $V_2O_5$ and/or 1000 to 5000 ppm by weight of $TiO_2$.

**8.** The process according to claim 5, wherein said raw material further comprises at least one additive selected from the group consisting of oxides of Ti, Li, Mg, Co, Ge, Sn and Al each in an amount of 2% by mole (this amount does not contain zero) and as additive for constituting auxiliary ingredients 50 to 300 ppm by weight of $SiO_2$ and 100 to 1000 ppm by weight of CaO and has an excess oxygen content, $\gamma$, contained in the range of from $3 \times 10^{-3}$ to $10 \times 10^{-3}$ specified by the molecular formula of claim 1, this formula is considered, except for the additive.

*Fig. 1*

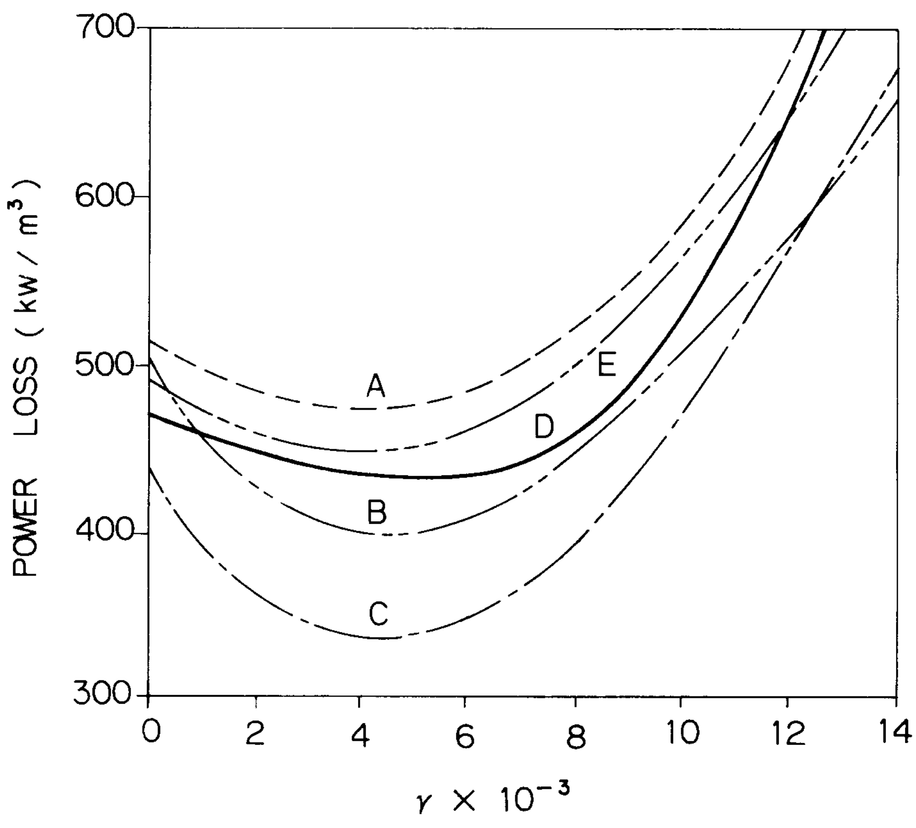

Fig. 2